# EUROPEAN PATENT APPLICATION

(11) **EP 4 047 385 A1**
(43) Date of publication of application: **24.08.2022**
(21) Application number: 21158254.9
(22) Date of filing: 19.02.2021
(51) Int. Cl.: G01S 7/481, G01S 17/42, G01S 17/89, G01S 17/931

(54) **METHOD FOR OPERATING A LIDAR SCANNER IN A VEHICLE, LIDAR SCANNER AND VEHICLE**

(71) Applicant: Argo AI GmbH, 80805 München (DE)
(72) Inventor: Friedmann, Felix, 85386 Eching (DE); Meertens, Roland, 80807 München (DE); Iegorov, Andrii, 80333 München (DE); Golakiya, Nirav, 81929 München (DE); Hristov, Stan, 80939 München (DE)
(74) Representative: Hofstetter, Schurack & Partner

(57) **Abstract**

The invention is concerned with a method for operating a lidar scanner (12) in a vehicle (10), wherein several successive measurement cycles (28) for scanning the surroundings (13) of the vehicle (10) are performed, wherein in a fixed scanning pattern (29) relative positions (30) of the sampling points (16) are the same for the successive measurement cycles (28) and wherein for each measurement cycle (28) a laser source (23) and a pattern generator (24) together generate the fixed scanning pattern (29). A shifting unit (32) shifts the fixed scanning pattern (29) of successive measurement cycles (28) relatively to the vehicle (10) and/or distorts the fixed scanning pattern (29) of successive measurement cycles (28) in order to generate an external scanning pattern (15) that is emitted into the surroundings (13).

## Description

The invention is concerned with any lidar scanner for a vehicle and a method for operating the lidar scanner in the vehicle. The lidar scanner generates a scanning pattern by which a surroundings of the vehicle is scanned repeatedly. Sampling points of the scanning patter may be adapted with regards to their location in the surroundings. Invention also provides a vehicle comprising the lidar scanner.

Lidar scanner may comprise a laser source for generating a laser beam and a pattern generator for guiding that laser beam such that the surroundings of the lidar scanner may be scanned according to a predefined scanning pattern. The scanning pattern is defined by the sampling points that are sampled or measured in one measurement cycle. It each sampling point, a controller of the lidar scanner evaluates the received laser beam that is reflected by at least one object in the surroundings. From the received laser beam, a scanning value, especially a distance value, may be derived by the controller. For each measurement cycle, a set of sampling values is generated that provide information about the surroundings at the sampling points.

The lidar scanner may provide a fixed sampling pattern for each scanning cycle or measurement cycle. Constructing such a lidar scanner with a fixed sampling pattern makes the lidar scanner sheep in production and robust during operation. By choosing a fixed sampling pattern, the sampling points for each measurement cycle are fixedly set.

The disadvantage of such a fixed scanning pattern is, however, that a trade-off has to be found between the goal of providing a detailed image of the surroundings and the duration of a measurement cycle, as more sampling points demand more time it takes to finish the measurement cycle.

Document US 9921056 B2 discloses devices and methods for scanning surfaces and generating 3-dimensional point clouds that describe the depth of the measured surface at each point. The devices and methods utilize scanning mirrors that reflect a laser beam into a pattern of scan lines. The motion of the scanning mirrors can be dynamically adjusted to modify the characteristics of the resulting 3-dimensional point cloud of the surface. For example, the adjustment of the scanning mirror motion can modify the resolution or data density of the resulting 3-dimensional point cloud that describes the measured depths of the surface.

A resulting disadvantage is that for varying the pattern, a very fast and flexible laser beam control is necessary, which makes the device technically complex.

It is an object of the present invention to provide a simply constructed laser scanner that is adaptable regarding the scanning pattern.

The object is accomplished by the subject matter of the independent claims. Advantageous developments with convenient and non-trivial further embodiments of the invention are specified in the following description, the dependent claims and the figures.

The invention provides a method for operating a lidar scanner in vehicle. The lidar scanner may scan the surroundings of the vehicle in the normal way of performing successive measurement cycles or scanning cycles. In each measurement cycle, a set of scanning values, especially distance values, for several sampling points of a fixed scanning pattern is provided. In other words, the lidar scanner scans the surroundings repeatedly by performing the measurement cycles vary in each measurement cycle one image of scan of the surroundings is performed. Each measurement cycle resides in sampling values each of which is associated with one measurement point or sampling point of a scanning pattern that is generated in a fixed manner. In other words, in the fixed scanning pattern relative position of the sampling points are the same for the successive measurement cycles. For example, the sampling points may be arranged in a great pattern. The fixed scanning pattern is generated by a laser source and a pattern generator together. The laser source may generate a laser beam and the pattern generator may guide or deflect the beam, for example by the means of a rotating mirror. Whenever the laser beam reaches one out of several predefined positions or orientation, i.e. 1 of the sampling points, a scanning value may be generated. When all the sampling points have been sampled, the measurement cycle is finished and the next measurement cycle is started, i.e. the scanning pattern is repeated. The respective set of scanning values is generated by a controller during and/or after each measurement cycle.

Although the actual scanning pattern as it is generated by the laser source and the pattern generator is fixed in that their relative positions of the sampling points remain the same, the inventive method is still able to change the location or position of the sampling points in the surroundings between the single measurement cycles.

To this end, a shifting unit shifts the fixed scanning pattern of successive measurement cycles relatively to the vehicle and/or distort the scanning pattern of those successive measurement cycles for generating an external scanning pattern that is emitted into the surroundings. In other words, before the fixed scanning pattern leaves the vehicle and enters the surroundings a the external scanning patter, the fixed scanning pattern may be manipulated by the shifting unit resulting in the external scanning pattern. The shifting unit performs the shifting and/or distorting of the fixed scanning pattern by changing a respective position and/or shape of at least one predefined element of the lidar scanner, in particular at least one mechanical element.

The invention provides the advantage that a laser source and pattern generator for generating a fixed scanning pattern may be used in a vehicle and still the position or location of the sampling points with respect to the surroundings may be varied in between the single measurement cycles. Thus, a comparatively robust pattern generator, for example a rotating mirror, may be used and still the fixed scanning pattern of such a pattern generator is movable or maybe deviated with regards to the surroundings.

The invention also comprises embodiments that provide features which afford additional technical advantages.

In one embodiment by the described change of position and/or shape of the at least one element, a light path of a laser beam is changed. The laser beam is generated by the laser source and guided according to the fixed pattern by the pattern generator such that the laser beam represent the fixed scanning pattern. In other words, one where fixed scanning pattern has been generated, it is manipulated by the shifting unit before the laser beam leaves the vehicle. This provides the advantage that the shifting unit and the pattern generator may be combined in a modular fashion. For example, a standout laser source and pattern generator may be used and may be enhanced by providing the shifting unit.

In one embodiment by the described change of position and/or shape of the at least one element at least some of the sampling points in one measurement cycle are each positioned in between respective sampling points of the previous measurement cycle. In other words, the shifting of the fixed scanning pattern does not mean that the scanning pattern is emitted into different directions. Rather, the scanning pattern is only shifted to such a degree that the scanning patterns of 2 successive measurement cycles overlap. Sampling points of one measurement cycle are located or positioned in the surroundings such that they provide a sampling value of a position or location that has not been sampled by a sampling point of the preceding measurement cycle. The two scanning patterns of two successive measurement cycles are interleaved. As an advantage is in effect, but to measurement cycles in combination provide a denser scanning pattern than the 2 single measurement cycles. This is an advantage as combination of a faster scanning of the surroundings and (by providing the second measurement cycle) at the same time a dense scanning pattern.

In one embodiment the at least one element for shifting the scanning pattern comprises a mirror, wherein the shifting unit alters a position of the mirror in between successive measurement cycles. The mirror may be placed in the light path between the laser source and the pattern generator or after the pattern generator. Additionally or alternatively, as one element a lens and/or prism may be provided that is mechanically moved in between successive measurement cycles by the shifting unit. Bypassing through the laser beam of the laser source through a lens and/or prism that is moved by the shifting unit, the laser beam will be deviated or deflected or diverted such that the fixed scanning pattern is shifted as a whole. Additionally or alternatively, a flexible and/or elastic lens and/or prism is deformed by the shifting unit, i.e. changed in shape. This provides the possibility of distorting scanning pattern. Additionally or alternatively, the laser source and/or the pattern generator is moved in the vehicle. In other words, by moving the laser source and/or the pattern generator to the left and right and/or up and down, the fixed scanning pattern emitted by the pattern generator is deviated or diverted in the surroundings. Additionally or alternatively, the whole lidar scanner is shifted relative to the remainder of the vehicle. This also results in a deviation of the fixed scanning pattern with regards to the surroundings. The described embodiments provide a robust solution to shifting a whole scanning pattern with regards to the surroundings.

In one embodiment the shifting unit performs the change of position and/or shape of the at least one element on the basis of a mechanical force of at least one mechanical actuator. In other words, the change of position and/or shade is obtained on the basis of pushing and/or pulling and/or turning the at least one element. Example for a mechanical actuators are: an electric motor (for example a stepper motor), a piezoelectric element, and ultrasonic motor. Additionally or alternatively to providing a mechanical force, a magnetic force is provided in one embodiment. The magnetic force is generated by at least one electromagnetic actuator. An example for such an electromagnetic actuator is an electric coil and/or a switchable magnet (as described, for example, in US8350663B1). Using a magnetic force provides the advantage, that mechanical wear is low.

In one embodiment, so setting a degree of change of position and/or shape of the at least one element, the switching unit switches between different preset values that each define a specific shift and/or distortion of the scanning pattern. In other words, pre-set degrees of shift and/or distortion for the scanning pattern are provided in the switching unit. The switching unit shows us between the pre-set values independence on an external input. In other words, an external signal may be provided to the switching unit and the switching unit will then set the degree of shift and/or distortion of the scanning pattern. This provides the advantage that the scanning pattern as is finally emitted by the laser scanner (i.e. the shifted and/or distorted scanning pattern) may be controlled or selected by an external signal source.

In one embodiment, such an external signal source is a process or for analysing at least 1 of the sets of scanning values. The processor detects at least one object in the surroundings of the vehicle on the basis of the at least one set of scanning values. For example, the processor may detect a traffic participant in the surroundings of the vehicle. As a reaction to this detection of at least one object, the scanning pattern may be adapted, in order to gain more and/or different information regarding the at least one detected object. To this end, the processor chooses 1 of the preset values according to a predefined sampling criterion and provides the choice (i.e. a signal choosing a specific preset value) as the input to the controller. The said sampling criterion describes how the at least one object shall be covered with sampling points. For example, the sampling criterion may be defined such that by choosing a preset value, edges of the at least sampling points are moved closer to edges of the at least one object. Thus, the processor for analysing at least one of the sets of scanning values will instruct the shifting unit to provide at least one further set of scanning values such that the sampling criterion is fulfilled. This provides the advantage that information about the at least one object are iteratively gained and/or refined.

In one embodiment by the controller though sets of scanning values of at least 2 successive measurement cycles are combined to generate an image that comprises a higher density of sampling points than the fixed scanning pattern.

The invention also provides the lidar scanner for a vehicle that may be operated according to an embodiment of the invention. The lidar scanner comprises a laser source and a pattern generator for generating a fixed scanning pattern. The laser source may provide a laser beam and the pattern generator may deflect the laser beam such that the predefined fixed scanning pattern is generated. Also, a controller for generating a respective set of scanning values during and/or after the respective measurement cycle or scanning cycle is provided. Such a set of scanning values is also called frame.

Before the fixed scanning pattern actually leaves their vehicle, the scanning pattern is shifted and/or distorted. To this end, the lidar scanner comprises a shifting unit which is designed to shift the scanning pattern of successive measurement cycles relatively to the vehicle and/or to distort the scanning pattern of successive measurement cycles by changing a respective position and/or shape of at least one predefined element of the lidar scanner.

The invention also comprises as embodiments of the inventive laser scanner, that comprise features, that have already been described in connection with the embodiments of the inventive method. For this reason, the features of the corresponding embodiments of the laser scanner are not described herein detailed again.

The invention is also concerned with a vehicle comprising an embodiment of the inventive scanner. In particular, the vehicle is a motor vehicle. Vehicle may be and autonomously driving vehicle, i.e. a vehicle with an autopilot functionality. The vehicle can be designed as, for example, a passenger vehicle or a truck or a bus.

The invention also comprises the combinations of the features of the different embodiments.

In the following an exemplary implementation of the invention is described. The figures show:
- Fig. 1: a schematic illustration of an embodiment of the inventive vehicle; and
- Fig. 2: a schematic illustration of a scanning pattern that is shifted according to an embodiment of the inventive method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

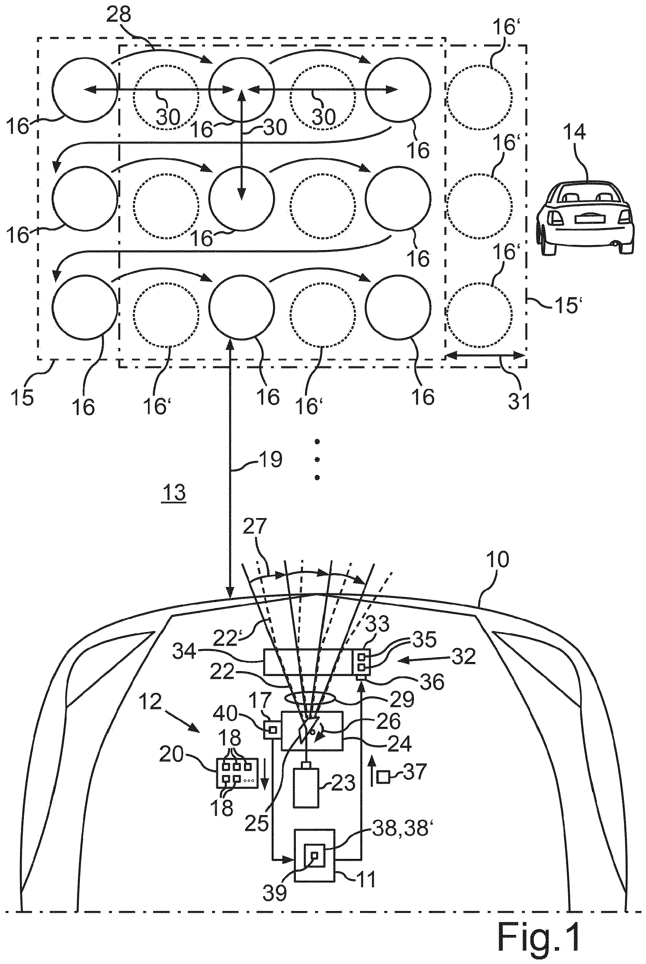

Figure 1 shows a top view on a front of a vehicle 10. The vehicle 10 can be, for example, a passenger vehicle or a truck. The vehicle 10 can be and autonomously driving vehicle comprising an autopilot functionality provided by an electronic control unit 11. Vehicle 10 may comprise a lidar scanner 12 for surveying or observing surroundings 13 of vehicle 10. For example, by means of their lidar scanner 12, the electronic control unit 11 may detect at least one object 14, for example a traffic participant like another vehicle or a pedestrian or a cyclist. Lidar scanner 12 may repeatedly scan the surroundings 13 by means of a scanning pattern 15 which may be defined by sampling points 16. For each sampling point 16 a controller 17 of laser scanner 12 may derive a single scanning value 18 which may described, for example, a distance 19 between the laser scanner 12 and the respective sampling point 16. When the whole scanning pattern 15 has been performed, i.e. a respective scanning value 18 for each sampling point 16 has been derived by controller 17, a set 20 of sampling values 18 is available which may be used, for example, by the electronic control unit 11 for detecting the at least one object 14.

For measuring a respective sampling value 18, a laser beam 22 is generated by a laser source 23, for example a laser diode. Laser beam 22 may then diverted or deviated by means of a pattern generator 24. Pattern generator 24 may comprise a rotating mirror 25 that performs a rotation 26 such that the laser beam 22 performs a scanning mole shown 27 through the surroundings 13. The scanning motion 27 is a relative motion with regards to the laser scanner 12 and the vehicle 10. The pattern generator 24 can be based on technology known from the prior art.

The generation of the set 20 of scanning values 18 for one complete pattern 15 is a frame or measurement cycle 28. Once the measurement cycle 28 has been completed, i.e. all sampling points 16 has been visited or measured by the beam 22, the next measurement cycle 28 is started.

The position of the sampling points 16 in the scanning pattern 15 may be determined by the configuration of the pattern generator 24, i.e. for example the rotation 26 of mirror 25. Additionally, the sampling times for taking a measurement of ace scanning value 18 decides where along the scanning motion 27 of the beam 22 a sampling point 16 is positioned in the surroundings 13.

The combination of laser source 23 and pattern generator 24 can be constructed in a very simple way in that a scanning pattern 29 as it may result from the pattern generator 24 itself can be a fixed scanning pattern, i.e. the relative positions 30 of the sampling point 16 in the scanning pattern 15 can be the same for each measurement cycle 28 in the fixed scanning pattern 29. In figure 1 of only a few relative positions 13 are labelled with a reference design for the sake of clearness. In vehicle 10, nevertheless the scanning pattern 15 may be shifted by a shift 31 in between 2 successive measurement cycles 28 such that, for example, the scanning pattern 15 is moved to the left and to the right alternating between 2 scanning positions in the surroundings 13 in with regard to vehicle 10. In other words, the shift 31 is independent of a movement of vehicle 10. The shifted scanning pattern 15' with shifted sampling points sampling points 16' is shown in figure 1 4 1 exemplary shift 31. For example, shifted sampling points 16' of the shifted scanning per tonne 15 upper strata may be positioned in between respective sampling point 16 of the (un-shifted) scanning pattern 15 of the preceding scanning cycle 28.

For effectuating the shift 31, lidar scanner 12 may comprise a shifting unit 32. In the shifting unit 32, an actuator 33 and an element 34 may be provided. Actuator 33 may change a position and/or shape of element 34 in order to divert the laser beam 22 for providing the shift 31 thus resulting in a shifted laser beam 22'.

As the element 34, a mirror and/or a lens and/or a prism may be provided. Additionally or alternatively an actuator (not shown) may be provided, that may change the position of the pattern generator 24 and/or the laser source 23 and/or the laser scanner 12 as a whole. The actuator 33 may cause the change in position and/or shape of any man 34 on the basis of a mechanical force and/or a magnetic force. For example, actuator 33 may be based on an electric motor and/or at least one piezo electric element and/or an ultrasonic motor. For providing a magnetic force, actuator 33 may be based on an electric coil and/or a switchable magnet. Element 34 can also be a flexible element, especially a flexible lens and/or a flexible prism. For providing the flexibility, a flexible material, for example a gel and/or an elastic polymer may be provided.

Additionally or alternatively to the shift 31, a distortion of the scanning pattern may be caused by the shifting unit 32.

The degree or amount of shift 31/all of a distortion may be determined by a preset value 35. Several preset value 35 may be provided. Shifting unit 32 may comprise a signal import 36 for receiving an external input signal 37. For example, input signal 37 may be generated by an analysis unit 38, for example an object recognition software, which may be part of electronic control unit 11. If the analysis you will note detects an object 14 in the surroundings 13 on the basis of at least one set 20 of scanning values 18, the analysis unit 38 may generate the input signal 37 4 switching between 2 different preset value 38 or in general for coursing or setting a shift 31 such that more and/or different information at different sampling points 16' may be obtained about the detected object 14. The choice regarding which shift 31 should be selected, can be based on a sampling criterion 39, which may demand, the edges of object 14 shall be detected.

By combining two sets 20 of scanning values 18 for 2 measurement cycles 28 that are based on shifted scanning patterns 15, 15', controller 17 may generate an image 40 of surroundings 13 on the basis of the whole number of sampling points 16, 16 of all the considered scanning patterns 15, 15' such that a higher density of sampling points 16, 16 (number of sampling points 16, 16' per unit area, for example per square meter) results in the image 40 as compared to a single measurement cycle 28.

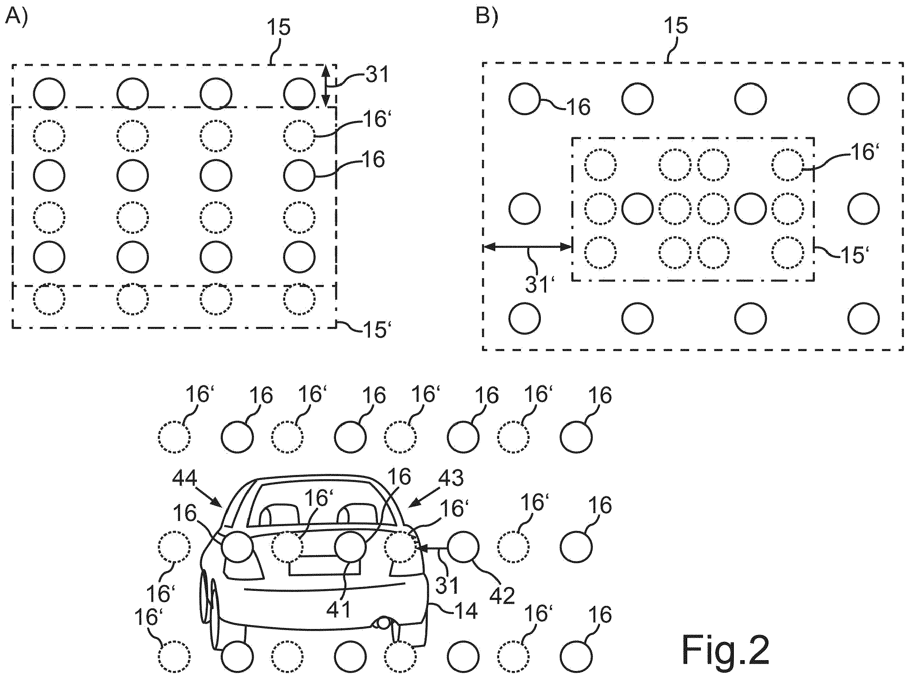

Figure 2 shows different exemplary possibilities A, B, C of providing a scanning pattern 15 with sampling points 16 and a corresponding shifted and/or distorted scanning pattern 15' where the sampling points 16 are repositioned to become sampling points 16'. Possibility A, the fixed shifting pattern 29 May be shifted up and down giving a vertical shift 31 and in contrast to the horizontal shift 31 shown in figure 1. Thus, in between 2 measurement cycles 28, the shift 31 may be applied by means of shifting unit 32, such that with the beginning of the next measurement cycle 38, pattern 15 and 15' may be applied in an alternating fashion.

Possibly B shows an example of a distortion of 31' where the scanning pattern 15 is shrunk to become scanning pattern 15'. Observation in a central area based on pet and 15'cornering in between 2 measurement cycles 28 on the basis of scanning pattern 15', a wide scanning pattern 15 words or less density regarding the sampling points 16 may be provided.

Possibility C illustrates how the analysis unit 38 may set a degree and direction of a shift 31 independence on the scanning criterion 39. This assures that for example on the basis of the set 20 of scanning values 18 for the sampling points 16 (closed circles in Fig. 2) may detect an object 14, for example another vehicle. Then, as the corresponding scanning values 18 for two sampling points 41, 42 of the sampling points 16 may indicate that one sampling point 41 is closer to the lidar scanner 12 than the other sampling point 42, the shift 31 may be chosen such that an edge 33 may be searched or detected. This can be done for at least one further edge 44 of object 14 such that an outer contour of object 14 may be systematically scanned or detected. The sampling criterion 39 may comprise that for any two sampling points 41, 42 that indicate a difference in scanning values 18 in a predefined range, especially a difference that is larger than a predefined threshold, a sampling point 16' should be placed or positioned in between the sampling points 41, 42 such that a position of the corresponding age 43, 44 may be detected.

The main idea is that a fixed sampling pattern may be alternated/shifted on a frame-by-frame basis (i.e. from measurement cycle to measurement cycle) such that the position of the sampling points is altered / changed for every two successive frames. Two successive frames combined provide a denser pattern.

For altering the pattern, the lidar may be mechanically shifted in between each frame. The fixed pattern of sampling points is therefore moved up/down and/or left right. Alternatively, the pattern may be distorted, for example by manipulating the path of the light of the lidar (flexible lens). Alternatively, the lidar control may switch between different preset values that define the positions of the sampling points.

The prior art does not disclose the alternating/shifting of a fixed pattern between scan frames. The document is only concerned of changing the scan rate during a frame, which results in a varying scan pattern.

The invention is concerned with the trade-off between a high scan rate for better details and the duration of a scan frame in a lidar scanning/sampling pattern. According to the invention, a fixed sampling pattern of a scan frame is alternated/shifted on a frame by frame basis such that the position of the sampling points is altered in each frame. However, the pattern itself stays unchanged or fixed, it is only shifted as a whole. A combination of e.g. two frames then results in a denser scanning/sampling pattern.

Overall, the example shows how a pattern generator for a fixed scanning pattern may be used in a more flexible way.

## Claims

1. Method for operating a lidar scanner (12) in a vehicle (10), wherein several successive measurement cycles (28) for scanning the surroundings (13) of the vehicle (10) are performed, wherein in each measurement cycle (28) a respective set (20) of scanning values (18) for several sampling points (16) of a fixed scanning pattern (29) is provided, wherein in the fixed scanning pattern (29) relative positions (30) of the sampling points (16) are the same for the successive measurement cycles (28) and wherein for each measurement cycle (28) a laser source (23) and a pattern generator (24) together generate the fixed scanning pattern (29) and a controller (17) generates the respective set of scanning values (18) during and/or after each measurement cycle (28),
**characterized in that**
a shifting unit (32) shifts the fixed scanning pattern (29) of successive measurement cycles (28) relatively to the vehicle (10) and/or distorts the fixed scanning pattern (29) of successive measurement cycles (28) for generating an external scanning pattern (15) that is emitted into the surroundings (13), wherein the shifting unit (32) performs the shifting and/or distorting by changing a respective position and/or shape of at least one predefined element (34) of the lidar scanner (12).

2. Method according to claim 1, wherein by the change of position and/or shape of the at least on element (34), a light path of a laser beam (22) is changed, wherein the laser beam (22) is generated by the laser source (23) and guided according to the fixed pattern (29) by the pattern generator (24) such that the laser beam (22) represents the fixed scanning pattern (29).

3. Method according to any of the preceding claims, by the change of position and/or shape of the at least on element (34) at least some of the sampling points (16') in one measurement cycle (28) are each positioned in between respective sampling points (16) of the previous measurement cycle (28).

4. Method according to any of the preceding claims, wherein the at least one element (34) for shifting the fixed scanning pattern (29) comprises:
- a mirror, wherein the shifting unit (32) alters a position of the mirror in between successive measurement cycles (28);
- a lens and/or prism that is mechanically moved in between successive measurement cycles (28);
- a and/or elastic flexible lens and/or prism that is deformed;
- the laser source (23) and/or the pattern generator (24) is moved in the vehicle (10);
- the whole lidar scanner (32) is shifted relative to a remainder of the vehicle (10).

5. Method according to any of the preceding claims, wherein the shifting unit (32) performs the change of position and/or shape of the at least on element (34) on the basis of a mechanical force of at least one mechanical actuator (33) and/or a magnetic force of at least one electromagnetic actuator (33).

6. Method according to any of the preceding claims, wherein for setting a degree of the change of position and/or shape of the at least on element (34) the switching unit (32) switches between different preset values (35) that each define a specific shift and/or distortion of the external scanning pattern (15), wherein the shifting unit (32) chooses the preset value (35) in dependence on an external input signal (37).

7. Method according claim 6, wherein a processor (38') for analyzing at least one of the sets (20) of scanning values (18) detects at least one object (14) in the surroundings (13) of the vehicle (10) on the basis of the at least one set (20) und choses one of the preset values (35) according to a predefined sampling criterion (39) for covering the at least one object (14) with sampling points (16) and provides the choice as the input signal (37) to the shifting unit (32) .

8. Method according to any of the preceding claims, wherein by the controller (17) the sets (20) of scanning values (18) of at least two successive measurement cycles (28) are combined to generate an image (40) that comprises a higher density of sampling points (16, 16') than the fixed scanning pattern (29).

9. Lidar scanner (12) for a vehicle (10), wherein the lidar scanner (12) comprises a laser source (23) and a pattern generator (24) for generating a fixed scanning pattern (29) and a controller (17) for generating a respective set (20) of scanning values (18) during and/or after a respective measurement cycle (28),
**characterized in that**
a shifting unit (32) is designed to shift the fixed scanning pattern (29) of successive measurement cycles (28) relatively to the vehicle (10) and/or to distort the scanning pattern (29) of successive measurement cycles (28) for generating an external scanning pattern (15) that is emitted into the surroundings (13) by changing a respective position and/or shape of at least one predefined element (34) of the lidar scanner (12).

10. Vehicle (10) comprising a lidar scanner (12) according to claim 9.
